Europäisches Patentamt

(19) European Patent Office

Office européen des brevets

(11) Publication number: **0 174 825**
**A1**

(12) **EUROPEAN PATENT APPLICATION**

(21) Application number: **85306400.4**

(22) Date of filing: **09.09.85**

(51) Int. Cl.⁴: **D 21 C 5/02**

(30) Priority: **13.09.84 US 650040**

(43) Date of publication of application:
**19.03.86 Bulletin 86/12**

(84) Designated Contracting States:
**BE DE FR GB IT NL SE**

(71) Applicant: **CALGON CORPORATION**
**Route 60-Campbell's Run Road**
**Robinson Township Pennsylvania 15205(US)**

(72) Inventor: **Windhager, Robert H.**
**Box 162 Oceanside Village**
**Surfside Beach South Carolina 29577(US)**

(74) Representative: **Crampton, Keith John Allen et al,**
**D YOUNG & CO 10 Staple Inn**
**London WC1V 7RD(GB)**

(54) **Deinkers comprising a non-ionic surfactant and ethylene glycol.**

(57) Cellulosic fibrous material impregnated with ink, e.g. newprint, is deinked by stirring it with water in the presence of an admixture of a non-ionic surfactant and ethylene glycol.

1

## DEINKERS COMPRISING A NON-IONIC SURFACTANT AND ETHYLENE GLYCOL

This invention relates to the deinking of material such as waste newsprint.

In a typical deinking process, waste newsprint is introduced into an aqueous bath to which has been added, a surface-active agent or detergent as a deinker. The bath may or may not be alkaline.

The waste newsprint becomes defibred in the bath and the ink is removed from the fibres by the detergent. The resulting slurry is composed of substantially deinked newsprint fibres, water and the detergent and ink particles. The slurry is rinsed, liquid is drained from the slurry, and the resulting thickened pulp is recycled into sheets of paper by conventional processing procedures well known to those skilled in papermaking.

The effectiveness of the deinking agent is determined by the brightness of the resulting paper sheets. Brightness is determined by a conventional test, and is expressed as a brightness number. The higher the number, the better the brightness.

The present invention provides a method for deinking cellulosic fibrous material impregnated with ink comprising stirring a mixture of the material and water in the presence of a deinking agent that is an admixture of a non-ionic surfactant and ethylene glycol.

The deinking agents are used in a solution in substantially aqueous media.

The temperature of the deinking solution may vary anywhere from room temperature, e.g. 40° to 70°F (5 to 21 °C) up to say 200°F (93°C).

In preparing the deinking solution, water is charged to the reactor or pulper in accordance with industry standards. The deinking agent is preferably added to the water prior to the addition of the waste paper or the waste.

The deinking process is described in U.S. Patent Specifications US-A-3,501,373, 3,932,206, 3,986,922, 4,162,186 and 4,311,552.

Any non-ionic surfactant may be used in the invention. Examples include alkylphenol surfactants, such as octylphenoxy polyethoxy ethanol.

It is preferred to use 0.01 to 0.1%, particularly 0.04 to 0.06%, by weight of the admixture, based on the dry paper weight.

It is preferred to use a blend containing 20 to 80, particularly 50 to 80, % by weight of surfactant, balance ethylene glycol.

In the following Example, parts and percentages are by weight if not otherwise qualified.

## EXAMPLE

A deinker of the invention was evaluated according to Tappi useful method 233, "Deinkability of High Ground Wood Waste Paper".

10 g. of waste paper were torn into approximately 1-inch (2.5-cm) squares. 10 ml. of a 0.05% active solution of 70% non-ionic surfactant and 30% ethylene glycol admixture (based on dry paper weight), 0.025 g. of sodium tripolyphosphate, and 0.15 g. of sodium metasilicate were mixed with the paper in 250 ml. of water at about 130 °F (54 °C). The temperature was maintained for 10 minutes. The mixture was stirred at high speed for 30 seconds. After the first 10 seconds of stirring, the paper was loosened and stirred for the remaining 20 seconds. The suspension was drained on a sieve and washed; the pulp was stirred into 500 ml. of fresh cold water, using a stirring rod, and drained again on the sieve. This was repeated twice more. The washed pulp was stirred into 1000 ml. of fresh cold water using a stirring rod. A handsheet was made on a sheet machine from 400 ml. of the pulp solution by draining 400 ml. of the pulp suspension on a sieve, adding 100 ml. of water at 165 °F (74 °C) and placing in a hot water bath maintained at approximately the same temperature. 0.08 g. of zinc hydrosulphite was added and the mixture was stirred for 10 seconds and left to stand without agitation for about 15 minutes while the temperature was maintained. A handsheet was then made of the decolorized pulp. The brightness of the handsheet was then obtained on a Tappi standard brightness meter using Tappi standard T-452. The results are summarized in the Table.

0174825

3

## TABLE

| Additive | Average brightness | |
|---|---|---|
| | unbleached | bleached |
| none | 46.3 | 52.0 |
| non-ionic surfactant* | 46.3 | 53.2 |
| 70% non-ionic surfactant* + 30% ethylene glycol | 47.3 | 55.5 |

* The non-ionic surfactant was the octylphenoxy polyethoxy ethanol sold under the registered Trade Mark "Triton X-100".

## CLAIMS

1.    A method for deinking cellulosic fibrous material impregnated with ink by stirring a mixture of the material and water in the presence of a deinking agent, characterized in that the deinking agent is an admixture of a non-ionic surfactant and ethylene glycol.

2.    A method as claimed in Claim 1, in which the non-ionic surfactant is an alkylphenol.

3.    A method as claimed in Claim 2, in which the alkylphenol is octylphenoxy polyethoxy ethanol.

4.    A method as claimed in any preceding claim, in which from 0.01 to 0.1%, by weight, active of the admixture is used.

5.    A method as claimed in Claim 4, in which from 0.04 to 0.06% by weight, active of the admixture is used.

6.    A method as claimed in any preceding claim, in which the admixture contains 20 to 80% by weight of non-ionic surfactant, balance ethylene glycol.

7.    A method as claimed in Claim 6, in which the admixture contains 20 to 50% by weight of surfactant.

8.    A method as claimed in any preceding claim, in which the cellulosic fibrous material impregnated with ink is newsprint.

European Patent
Office

**EUROPEAN SEARCH REPORT**

0174825

Application number

EP 85 30 6400

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-3 392 083 (R.H. ILLINGWORTH) <br> * Whole document * <br><br> ----- | 1,2,4, 6-8 | D 21 C 5/02 |

TECHNICAL FIELDS
SEARCHED (Int. Cl 4)

D 21 C

The present search report has been drawn up for all claims

| Place of search <br> THE HAGUE | Date of completion of the search <br> 30-10-1985 | Examiner <br> NESTBY K. |
|---|---|---|